# EUROPÄISCHE PATENTSCHRIFT

(11) **EP 2 776 807 B1**
(45) Veröffentlichungstag und Bekanntmachung des Hinweises auf die Patenterteilung: **23.05.2018**
(21) Anmeldenummer: 12780692.5
(22) Anmeldetag: 15.10.2012
(51) Int. Cl.: G01M 7/02, G01M 15/02

(54) **PRÜFSTANDSANORDNUNG SOWIE VERFAHREN ZUM BETREIBEN EINER DERARTIGEN PRÜFSTANDSANORDNUNG**
TEST BENCH ARRANGEMENT AND METHOD FOR OPERATING SUCH A TEST BENCH ARRANGEMENT
AGENCEMENT DE BANC D'ESSAI AINSI QUE PROCÉDÉ POUR FAIRE FONCTIONNER UN TEL AGENCEMENT DE BANC D'ESSAI

(30) Priorität: 10.11.2011 AT 16622011
(43) Veröffentlichungstag der Anmeldung: 17.09.2014
(73) Patentinhaber: AVL List GmbH, 8020 Graz (AT)
(72) Erfinder: DANK, Matthias, A-8045 Graz (AT); HOLZHAMMER, Peter, 6067 Absam (AT); STROHSCHEIN, Wolfram, A-8111 Judendorf-Strassengel (AT); WINDISCH, Christoph, A-8020 Graz (AT)
(74) Vertreter: Patentanwälte Pinter & Weiss OG
(86) Internationale Anmeldenummer: PCT/EP2012/070365
(87) Internationale Veröffentlichungsnummer: WO 2013/068202

(56) Entgegenhaltungen:
- EP-A1- 0 498 648
- EP-A2- 1 031 827
- US-A- 5 060 919

## Beschreibung

Die Erfindung betrifft eine Prüfstandsanordnung für zumindest einen Prüfling, welche zumindest einen Aktuator zur Einwirkung auf den Prüfling, zumindest einen Sensor zur Erfassung von Messwerten, sowie eine Tragestruktur für den Prüfling umfasst, wobei zumindest ein in zumindest einer schwingungsrelevanten Eigenschaft einstellbares Element zwischen zumindest einem Paar von gegeneinander schwingfähigen Elementen der Prüfstandsanordnung und/der des Prüflings zwischengeschaltet ist, sowie ein Verfahren zum Betreiben einer derartigen Prüfstandsanordnung, bei welchem über zumindest einen Sensor Messwerte zumindest des Prüflings, vorzugsweise auch der Prüfstandsanordnung und/oder der Umgebung erfasst werden, wobei die Schwingungen zwischen zumindest einem Paar von gegeneinander schwingfähigen Elementen der Prüfstandsanordnung und/der des Prüflings mittels zumindest eines einstellbaren Elementes beeinflusst werden.

Beispielsweise zeigt die US 5 060 919 A einen Dämpfer dessen Dämpferkonstante durch Verwendung einer elektrorheologischen Flüssigkeit beeinflusst werden kann um resonanzen zu vermeiden.

Bei Test auf einem Prüfstand sollen die realen Bedingungen natürlich bestmöglich nachgebildet werden. Diesbezüglich verbesserte Korrelation zwischen den Verhältnissen von Motoren, Komponenten od. dgl. bei Anwendung beispielsweise in einem realen Fahrzeug und andererseits in einer Prüfstandsanordnung ergibt realistischere Prüfergebnisse und führt auch zur Vermeidung unerwarteter Fehler und Störungen im realen Betrieb. Damit ist auch eine Verbesserung des Design der Fahrzeugkomponenten für bessere Leistung und Haltbarkeit möglich.

Die EP 1 031 827 A2 und die EP 0 498 648 A1 zeigen entsprechende Prüfanordnungen, bei welchen durch Aktuatoren äußere Kräfte auf entsprechende Prüflinge eingeprägt werden.

Die Aufgabe der vorliegenden Erfindung waren daher eine Prüfstandsanordnung und ein Verfahren zum Betreiben davon, mit welchem die obigen Ziele erreicht werden können.

Zur Lösung dieser Aufgabe ist die Prüfstandsanordnung erfindungsgemäß dadurch gekennzeichnet, eine Steuereinrichtung vorgesehen ist, welche die schwingungsrelevante Eigenschaft des Elementes, in Abhängigkeit von zumindest einem im Betrieb veränderlichen Parameter des Prüflings oder der Prüfstandsanordnung, verändert, um einem vorgegebenen Verlauf von Vibrationen des Prüflings oder zumindest eines Teils der Prüfungsanordnung zu folgen. Damit kann jeder beliebige Schwingungszustand zwischen der Prüfstandsanordnung und dem Prüfling eingestellt werden, beispielsweise um Resonanzfrequenzen dauerhaft in einen nicht kritischen Bereich zu verschieben.

Gemäß einer besonders vorteilhaften Ausführungsform ist das einstellbare Element in zumindest einer schwingungsrelevanten Eigenschaft durch eine Steuereinrichtung adaptiv veränderbar. Bei einer derart aktiven Ausführung kann der Schwingungszustand während des Betriebs verändert werden, um beispielsweise eine Grundauslegung der Resonanzbereiche zu ermöglichen und das Durchfahren von Resonanzbereichen kurz halten zu können. Weiteres ergibt sich die Möglichkeit gezielte Schwingungszustände, z.B. wie bei realen Fahrtzuständen, am Prüfstand nachzubilden.

Eine mögliche Ausführungsform betreffend der Anordnung sieht vor, dass das Element zwischen Prüfling und Prüfstandsanordnung zwischengeschaltet ist.

Gemäß einer anderen bzw. ergänzenden Ausführungsform kann auch vorgesehen sein, dass das Element zur Lagerung zumindest eines Elementes der Prüfstandsanordnung dient.

Eine weitere Ausführungsform ist dadurch gekennzeichnet, dass das Element in zumindest einer Lageranordnung zumindest eines Teiles der Prüfstandsanordnung und/oder des Prüflings vorgesehen ist.

Auch ist eine Ausführungsform zweckmäßig, bei welcher das Element zwischen dem Prüfling und zumindest einem auf den Prüfling einwirkenden Aktuator zwischengeschaltet ist.

Es ist von Vorteil, wenn gemäß einem optionalen Merkmal der Erfindung die Steuereinrichtung die schwingungsrelevante Eigenschaft des Elementes in Abhängigkeit von zumindest einem im Betrieb veränderlichen Parameter des Prüflings oder der Prüfstandsanordnung verändert.

Vorteilhafterweise ist dabei vorgesehen, dass in der Steuereinrichtung ein im Normalbetrieb ermittelter Verlauf der Vibrationen des Prüflings oder zumindest eines Teiles der Prüfstandsanordnung in Abhängigkeit von dem zumindest einen im Betrieb veränderlichen Parameter abgelegt ist, dass zumindest ein Sensor für die Vibrationen vorgesehen ist, und dass ein Regelkreis vorgesehen ist, über welchen die schwingungsrelevante Eigenschaft des Elementes derart verändert wird, dass die Vibrationen in Abhängigkeit des zumindest einen Parameters dem in der Steuereinrichtung abgelegten Verlauf der Vibrationen entspricht. Damit können beliebige, im realen Fahrzeug aufgenommene Vibrationsverläufe auch auf dem Prüfstand durchfahren werden.

Alternativ dazu könnte aber auch eine Ausführungsform zweckmäßig sein, bei welcher für nicht aus Testfahrten oder sonstigen realen Quellen bekannte Vibrationsverläufe in der Steuereinrichtung ein Modell für den Verlauf der Vibrationen des Prüflings oder zumindest eines Teiles der Prüfstandsanordnung in Abhängigkeit von dem zumindest einen im Betrieb veränderlichen Parameter abgelegt ist, dass zumindest ein Sensor für die Vibrationen vorgesehen ist, und dass ein Regelkreis vorgesehen ist, über welchen die schwingungsrelevante Eigenschaft des Elementes derart verändert wird, dass die Vibrationen in Abhängigkeit des zumindest einen Parameters dem Verlauf gemäß dem Modell entsprechen, wobei dieses Modell für den Verlauf der Vibrationen vorzugsweise die gegenseitigen Wechselwirkungen im Rahmen eines Mehrkörpermodells berücksichtigt.

Eine erste vorteilhafte Ausführungsform für ein erfindungsgemäßes einstellbares Element ist dadurch gekennzeichnet, dass das Element zumindest ein zwischen zwei Buchsen mit einstellbarer Vorspannung eingespanntes elastisches Element, vorzugsweise ein Metallgeflecht, insbesondere ein Ganzmetallkissen, aufweist. Damit kann als schwingungsrelevante Eigenschaft die Steifigkeit der Lagereinheit mit nur geringem Aufwand unter Verwendung des ein und selben Elementes verändert werden, um den gewünschten Schwingungszustand der Prüfstands-Prüflings-Anordnung einzustellen, in dem die Steifigkeit des elastischen Elementes, mit entweder progressiver oder degressiver Kraft-Weg-Kurve, durch Veränderung der Vorspannung verändert wird. Dies kann beispielsweise durch Einpressen einer anderen Lagerhülse mit anderem Durchmesser bewirkt werden. Metallgeflechte, insbesondere Ganzmetallkissen, zeigen als weitere Vorteile keine Alterungserscheinungen und damit keine unerwünschten Veränderungen von Steifigkeit und Dämpfungseigenschaften über die Zeit, sowie eine Unabhängigkeit von Temperatur und Erregerfrequenz.

Gemäß einer alternativen Ausführungsform kann aber auch vorgesehen sein, dass das Element unter Verwendung einer elektro- oder magnetorheologischen Flüssigkeit aufgebaut ist.

Eine weitere alternative Ausführungsform sieht vor, dass das Element ein hydraulisches System mit veränderlichem Querschnitt und/oder Innendruck umfasst.

Beim Betreiben einer derartigen Prüfstandsanordnung wie in den vorhergehenden Absätzen beschrieben ist zur Lösung der eingangs gestellten Aufgabe erfindungsgemäß vorgesehen, dass die Schwingungen zwischen zumindest einem Paar von gegeneinander schwingfähigen Elementen der Prüfstandsanordnung und/der des Prüflings mittels zumindest eines einstellbaren Elementes beeinflusst werden.

Eine vorteilhafte Weiterführung dieser grundlegenden Erfindungsidee ist dadurch gekennzeichnet, dass zumindest eine der schwingungsrelevanten Eigenschaften des Elementes adaptiv verändert wird, gegebenenfalls auch während eines Prüflaufes.

Gemäß einer weiteren Ausführungsvariante ist vorgesehen, dass zumindest eine schwingungsrelevante Eigenschaft des Elementes in Abhängigkeit von zumindest einem im Betrieb veränderlichen Parameter der Prüfstandsanordnung und/der des Prüflings verändert wird.

So können beispielsweise die Vibrationen zwischen zumindest einem Paar von gegeneinander schwingfähigen Elementen der Prüfstandsanordnung und/der des Prüflings ermittelt werden, und wird zumindest eine schwingungsrelevante Eigenschaft des Elementes derart verändert, dass die Vibrationen in Abhängigkeit des zumindest einen Parameters einem vordefinierten Verlauf folgen.

Eine ebenso mögliche Alternative ist erfindungsgemäß dadurch gekennzeichnet, dass die Vibrationen zwischen zumindest einem Paar von gegeneinander schwingfähigen Elementen der Prüfstandsanordnung und/der des Prüflings ermittelt werden, und dass zumindest eine schwingungsrelevante Eigenschaft des Elementes derart verändert wird, dass die Vibrationen in Abhängigkeit des zumindest einen Parameters einem durch ein Modell vorgegebenen Verlauf entspricht, wobei das Modell für den Verlauf der Vibrationen vorzugsweise die gegenseitigen Wechselwirkungen im Rahmen eines Mehrkörpermodells berücksichtigt.

Um Resonanz-Probleme der Prüfstandsanordnung zu vermeiden, ist eine Ausführungsform der Erfindung vorgesehen, bei welcher zumindest eine schwingungsrelevante Eigenschaft des Elementes derart verändert wird, dass die kritische Frequenz der Prüfstandsanordnung inklusive Prüfling zu jedem Zeitpunkt außerhalb des aktuellen Frequenzbereichs liegt.

Vorteilhafterweise erfolgt dabei die Veränderung der schwingungsrelevanten Eigenschaft des Elementes schneller als jede Änderung der Frequenz der Vibrationen des Prüflings und/oder der Prüfstandsanordnung.

In der nachfolgenden Beschreibung soll die Erfindung anhand von Beispielen näher erläutert werden, die auf die beigefügten Zeichnungen Bezug nehmen.

Dabei zeigt die Fig. 1 einen Teil einer Prüfstandsanordnung in perspektivischer Ansicht, Fig. 2a ist eine Seitenansicht und Fig. 2b eine Schnittansicht einer erfindungsgemäßen Lageranordnung, Fig. 3a und Fig. 3b sind eine Seitenansicht und eine Schnittansicht einer weiteren Ausführungsform einer Lageranordnung und Fig. 4 ist ein Diagramm mit einer Darstellung dreier mit unterschiedlich eingestellter Lageranordnung erzielbaren Vibrationsverläufe.

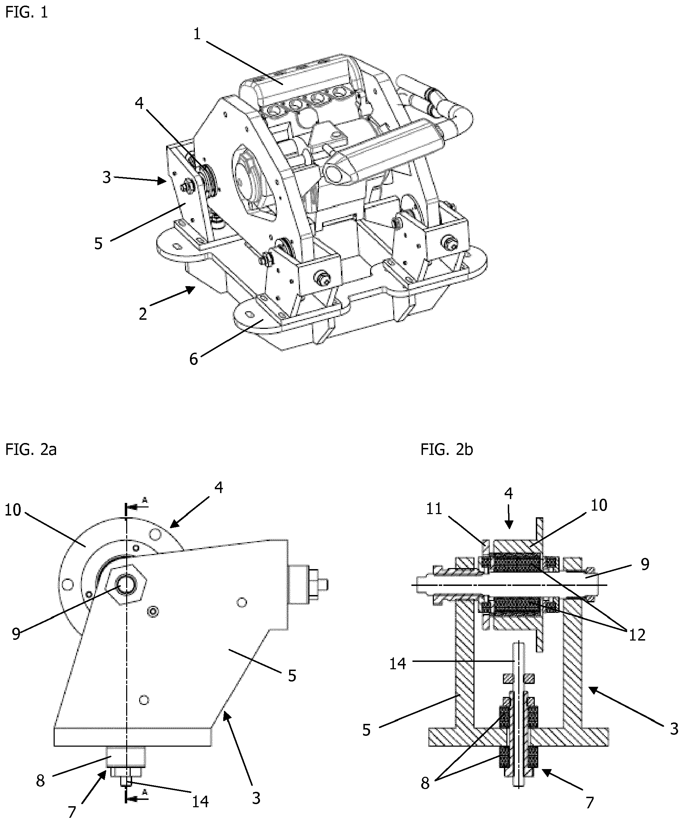

Auf einer Prüfstandsanordnung wie in Fig. 1 dargestellt ist ein Motor 1 als Prüfling montiert. Die zur Einwirkung auf den Prüfling vorgesehene Aktuatorik sowie Sensorik zur Erfassung von Messwerten des Prüflings 1, allenfalls auch von dessen Umgebung und der Prüfstandsanordnung selbst, ist der Übersicht halber nicht dargestellt und ist für die Erfindung auch nicht von Belang. Die gezeigte Prüfstandsanordnung weist eine Tragestruktur 2 für den Prüfling 1 auf, die im dargestellten Beispiel eine Lageranordnung aus vier Lagern 3 umfasst.

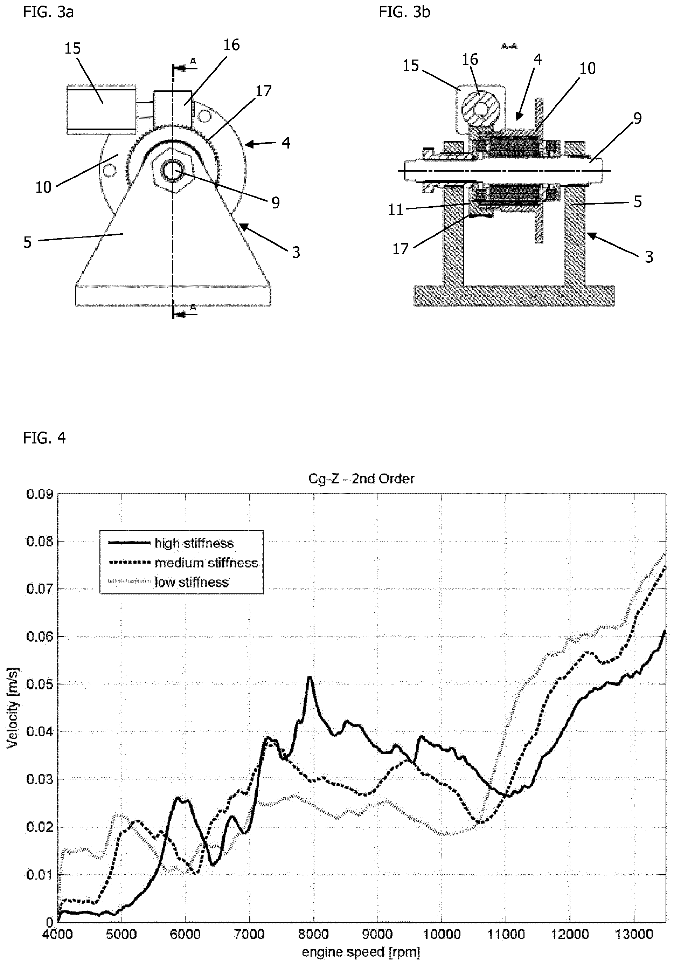

Zumindest eine Lageranordnung 3 des Prüflings 1, im Detail dargestellt in den Fig. 2a bis 3b, weist zumindest ein durch eine Steuereinrichtung in zumindest einer schwingungsrelevanten Eigenschaft einstellbares, vorzugsweise sogar adaptiv veränderbares Element 4 auf. Andere oder einander ergänzende Möglichkeiten zum Einbau derartiger einstellbarer Elemente 4 wären ganz allgemein alle Paare von gegeneinander schwingfähigen Elementen der Prüfstandsanordnung und/oder des Prüflings 1, so etwa zwischen Prüfling 1 und Prüfstandsanordnung, insbesondere der Tragestruktur 2, weiters in der Lagerung zumindest eines Elementes der Prüfstandsanordnung selbst oder auch zwischen Prüfling 1 und zumindest einem auf den Prüfling 1 einwirkenden Aktuator. Damit ist es möglich, die Schwingungen zwischen zumindest einem Paar von gegeneinander schwingfähigen Elementen der Prüfstandsanordnung und/der des Prüflings 1 mittels zumindest eines der in zumindest einer schwingungsrelevanten Eigenschaft einstellbaren oder auch adaptiv veränderbaren Elemente 4 zu beeinflussen. Ein Beispiel für die mögliche Art der Beeinflussung zeigt die Fig. 4, in welcher drei aufgrund unterschiedlicher Steifigkeit und/oder Dämpfung zumindest eines Elements 4 unterschiedliche Vibrationsverläufe über der Drehzahl eines Prüflings 1 aufgetragen ist.

Eine erste Möglichkeit für die Beeinflussung der Schwingungseigenschaften innerhalb der Prüfstandsanordnung mit oder ohne Prüfling 1 ist eine einmalige Einstellung der Steifigkeit und/oder Dämpfungseigenschaften des Elementes 4. Besonders vorteilhaft ist jedoch die automatische Einstellung oder auch Veränderung bzw. adaptive Veränderung zumindest einer schwingungsrelevanten Eigenschaft des Elementes 4 zu Beginn oder auch während des Prüflaufs durch Signale einer Steuereinrichtung.

Um dabei zu jedem Zeitpunkt und für jede Situation die optimale Einstellung zu erzielen, wird die zumindest eine schwingungsrelevante Eigenschaft der Elemente 4 in Abhängigkeit von zumindest einem im Betrieb veränderlichen Parameter des Prüflings 1 oder der Prüfstandsanordnung verändert. Dazu ist vorteilhafterweise in der Steuereinrichtung ein im Normalbetrieb ermittelter Verlauf der Vibrationen des Prüflings 1 oder zumindest eines Teiles der Prüfstandsanordnung, etwa der Tragestruktur 2 für den Prüfling 1, in Abhängigkeit von dem zumindest einen im Betrieb veränderlichen Parameter abgelegt. Weiters ist ein Sensor für die Vibrationen vorgesehen, entweder ohnedies in der Sensorik der Prüfstandsanordnung enthalten oder separat nur für die Einstellung der Elemente 4 zusätzlich eingebaut, insbesondere im Bereich von Prüfling 1 oder dessen Tragestruktur 2, sowie ein Regelkreis, über welchen die schwingungsrelevante Eigenschaft der Elemente 4 derart verändert wird, dass die Vibrationen in Abhängigkeit des zumindest einen Parameters dem in der Steuereinrichtung abgelegten Verlauf der Vibrationen entspricht.

Wenn der genaue Verlauf der Vibrationen für den konkreten Aufbau nicht aus realen Versuchen vorab ermittelt werden konnte, kann in der Steuereinrichtung ein Modell für den Verlauf der Vibrationen des Prüflings 1 oder zumindest eines Teiles der Prüfstandsanordnung in Abhängigkeit von dem zumindest einen im Betrieb veränderlichen Parameter abgelegt sein, wobei über einen identischen Regelkreis wie eben beschrieben die Elemente 4 derart adaptiert werden, dass die Vibrationen in Abhängigkeit des zumindest einen Parameters dem Verlauf gemäß dem Modell entsprechen. Dieses Modell kann vorteilhafterweise die gegenseitigen Wechselwirkungen im Rahmen eines Mehrkörpermodells berücksichtigen.

Um Resonanz-Probleme der Prüfstandsanordnung zu vermeiden, kann die schwingungsrelevante Eigenschaft des Elementes 4 derart verändert werden, dass die kritische Frequenz der Prüfstandsanordnung, vorzugsweise der Tragestruktur 2 für den Prüfling 1 inklusive dem Prüfling 1 selbst, außerhalb des Bereiches der jeweils aktuellen Frequenz der Vibrationen liegt. Vorteilhafterweise ist dabei vorgesehen, dass die schwingungsrelevante Eigenschaft des Elementes 4 während einer Änderung der Frequenz der Vibrationen innerhalb eines gegenüber dieser Änderung kleineren Zeitraums verändert werden. Um z.B. bei der Inbetriebnahme einer Maschine, bei der die Maschine aus einem unterkritischen in einen überkritischen Drehzahlbereich hochgefahren werden muss, die gefährliche Verweildauer im kritischen Bereich möglichst kurz zu halten, soll durch eine die ansteuerbar-variable Steifigkeit die aktuell im System vorhandene kritische Drehzahl so eingestellt werden, dass sie im unterkritischen Drehzahlbereich oberhalb einer nominell-kritischen Drehzahl liegt, und dass ab Erreichen einer Drehzahl oberhalb der nominell kritischen Drehzahl die aktuell auftretende kritische Drehzahl unter die nominell kritische Drehzahl verschoben wird, wobei der Übergang von einer zur anderen kritischen Drehzahl rasch, quasi sprungartig erfolgt - zumindest rascher als die gewöhnliche Verweildauer der Maschine im kritischen Drehzahlbereich wäre.

Anders ausgedrückt soll also bei niedrigen Anregungsfrequenzen eine hohe kritische Frequenz eingestellt werden, und bei hohen Anregungsfrequenzen soll eine niedrige kritische Frequenz eingestellt werden, mit einem raschen, möglichst sprungartigen Übergang von der einen zur anderen kritischen Frequenz.

Die jeweils eingestellte kritische Frequenz kann evtl. auch laufend den momentanen Anregungsfrequenzen angepasst werden, um in jedem Betriebspunkt die gewünschten optimalen Systemeigenschaften zu erzeugen.

Die in Fig. 2a und 2b dargestellte Lageranordnung 3 gemäß der Erfindung umfasst eine Aufhängung 5 des Prüflings 1, die mit einem anderen der gegeneinander schwingungsfähigen Teile des Aufbaus, hier der Basis 6, verbunden ist. Nicht notwendigerweise vorgesehen sein muss die zwischen Aufhängung 5 und Basis 6 der Tragestruktur 2 zwischengeschaltete Anordnung aus der Schraubenverbindung 7 mit dem Dämpfer 8, welche den Vorteil hat, die radiale Steifigkeit der Lageranordnung 3 richtungsabhängig verstellen zu können.

In der Lageranordnung 3 ist auf einer Achse 9 das adaptiv veränderbare Element 4 gelagert, welches beispielsweise aus einer ersten Buchse 10 mit Befestigungsflansch für den Prüfling 1, einer darin beispielsweise eingeschraubten zweiten Buchse 11 und zumindest einem zwischen den Buchsen 10, 11 und der Achse zwischengeschalteten elastischen Element 12 besteht. Für dieses Element 12 wird vorteilhafterweise ein Metallgeflecht gewählt, insbesondere ein Ring aus einem Ganzmetallkissen oder mehrere derartige Kissensegmente, die zusammen einen die innere Buchse 11 umgebenden Ring ergeben.

Durch die Dimensionierung des elastischen Elementes 12 und der Buchsen 10, 11, insbesondere durch deren Durchmesser und relative Abmessungen, kann einfach und rasch die Vorspannung im elastischen Element 12 und damit eine gewünschte Steifigkeit und/oder Dämpfung im Element 4 eingestellt werden. Neben dem Einfluss der Durchmesser der Buchsen 10, 11 auf die Vorspannung des Elementes 12 ist diese auch über die Kraft bestimmt, welche die Buchsen 10, 11 aufgrund ihrer Verschraubung in axialer Richtung auf das Element 12 ausüben. Durch die jeweils insgesamt aus allen Komponenten vorliegende Vorspannung wird, in Verbindung mit der progressiven oder degressiven Kraft-Weg-Kennlinie des elastischen Elementes, die Steifigkeit und/oder Dämpfung eingestellt.

Bei aktiver Ausführung des Elementes 4 wird durch die oben genannten Faktoren eine Grundeinstellung der Steifigkeit und Dämpfung getroffen, wobei eine adaptive Veränderung zumindest einer schwingungsrelevanten Eigenschaft des Elementes 4 durch während des Prüflaufes veränderbare Einflüsse auf das Element 12 möglich ist. So ist beispielsweise durch eine während des Prüflaufes variierbare Verschraubung zwischen den beiden Buchsen 10, 11 eine Veränderung der Vorspannung des elastischen Elementes 12 möglich. Wie in Fig. 3a und 3b dargestellt ist, kann die Verschraubung zwischen den Buchsen 10, 11 beispielsweise durch eine Antriebsanordnung 15, 16, 17 während des Prüflaufes automatisch verstellt werden. Die Antriebsanordnung kann dazu einen Elektromotor 15 umfassen, der über eine Welle mit Zahnrad 15 auf eine Außenverzahnung 17 der Buchse 11 einwirkt und damit die durch die Verschraubung auf das elastische Element 12 wirkenden Kräfte verändert. Eine die Vorspannung zwischen den Buchsen 10, 11 bestimmende Kraft könnte aber auch beispielsweise hydraulisch, magnetisch, elektrisch, piezoelektrisch, od. dgl. aufgebracht werden.

Das Grundprinzip beruht eigentlich auf der Aufbringung von radialen Kräften auf das Element 12 und der dadurch veränderlichen Steifigkeit diese Elementes 12. Die in Fig. 2b dargestellten Anordnung ist eine mögliche Variante, bei der durch die als Druckflansch ausgebildete Buchse 11 axiale Kräfte auf keilförmige Ringspannelemente aufgebracht werden, die die axiale Kraft in radiale Richtung umlenken und auf das Element 12 wirken. Weitere mögliche Anordnungen wären z.B. das Aufbringen eines hydraulischen Druckes zwischen Buchse 10 und Element 12.

Schließlich kann durch je einen in die Schraubenverbindung 7 oder auch in einer separaten Aufnahme 13, die ebenfalls mit einem Dämpfer in der Aufhängung 5 befestigt ist, gelagerten und mittels Servomotor oder hydraulischem Antrieb auch während des Prüflaufes verstellbaren Stift 14 eine axiale Vorspannung des Elementes 8 erreicht werden.

Anstelle des elastischen Elementes 12 können die adaptiv veränderbaren Elemente 4 unter Verwendung einer elektro- oder magnetorheologischen Flüssigkeit aufgebaut sein oder allenfalls auch ein hydraulisches System mit veränderlichem Querschnitt und/oder Innendruck zur Veränderung der Steifigkeit und Dämpfung beinhalten.

In einer einfachen Ausführungsform weisen die adaptiv veränderbaren Elemente 4 eine lineare Charakteristik auf. Andererseits kann aber auch gezielt die Progressivität bzw. Degressivität der Kennlinie ausgenutzt werden, um die Steifigkeit über die Vorspannung der Elemente 12 zu verändern.

## Patentansprüche

1. Prüfstandsanordnung für zumindest einen Prüfling (1), welche zumindest einen Aktuator zur Einwirkung auf den Prüfling, zumindest einen Sensor zur Erfassung von Messwerten, sowie eine Tragestruktur (2) für den Prüfling (1) umfasst, wobei zumindest ein in zumindest einer schwingungsrelevanten Eigenschaft einstellbares Element (4) zwischen zumindest einem Paar von gegeneinander schwingfähigen Elementen der Prüfstandsanordnung und/der des Prüflings (1) zwischengeschaltet ist **dadurch gekennzeichnet, dass** eine Steuereinrichtung vorgesehen ist, welche die schwingungsrelevante Eigenschaft des Elementes (4), in Abhängigkeit von zumindest einem im Betrieb veränderlichen Parameter des Prüflings (1) oder der Prüfstandsanordnung, verändert, um einem vorgegebenen Verlauf von Vibrationen des Prüflings (1) oder zumindest eines Teils der Prüfungsanordnung zu folgen.

2. Prüfstandsanordnung Anspruch 1, **dadurch gekennzeichnet, dass** das einstellbare Element (4) in zumindest einer schwingungsrelevanten Eigenschaft durch eine Steuereinrichtung adaptiv veränderbar ist.

3. Prüfstandsanordnung nach einem der Ansprüche 1 oder 2, **dadurch gekennzeichnet, dass** das Element (4) zwischen Prüfling (1) und Prüfstandsanordnung zwischengeschaltet ist.

4. Prüfstandsanordnung nach einem der Ansprüche 1 oder 2, **dadurch gekennzeichnet, dass** das Element (4) zur Lagerung zumindest eines Elementes der Prüfstandsanordnung dient.

5. Prüfstandsanordnung nach einem der Ansprüche 1 oder 2, **dadurch gekennzeichnet, dass** das Element (4) in zumindest einer Lageranordnung (3) zumindest eines Teiles der Prüfstandsanordnung und/oder des Prüflings (1) vorgesehen ist.

6. Prüfstandsanordnung nach einem der Ansprüche 1 oder 2, **dadurch gekennzeichnet, dass** das Element (4) zwischen dem Prüfling (1) und zumindest einem auf den Prüfling (1) einwirkenden Aktuator zwischengeschaltet ist.

7. Prüfstandsanordnung nach einem der Ansprüche 1 bis 6, **dadurch gekennzeichnet, dass** die Steuereinrichtung die schwingungsrelevante Eigenschaft des Elementes (4) in Abhängigkeit von zumindest einem im Betrieb veränderlichen Parameter des Prüflings (1) oder der Prüfstandsanordnung verändert.

8. Prüfstandsanordnung nach Anspruch 7, **dadurch gekennzeichnet, dass** in der Steuereinrichtung ein im Normalbetrieb ermittelter Verlauf der Vibrationen des Prüflings (1) oder zumindest eines Teiles der Prüfstandsanordnung in Abhängigkeit von dem zumindest einen im Betrieb veränderlichen Parameter abgelegt ist, dass zumindest ein Sensor für die Vibrationen vorgesehen ist, und dass ein Regelkreis vorgesehen ist, über welchen die schwingungsrelevante Eigenschaft des Elementes (4) derart verändert wird, dass die Vibrationen in Abhängigkeit des zumindest einen Parameters dem in der Steuereinrichtung abgelegten Verlauf der Vibrationen entspricht.

9. Prüfstandsanordnung nach Anspruch 7, **dadurch gekennzeichnet, dass** in der Steuereinrichtung ein Modell für den Verlauf der Vibrationen des Prüflings (1) oder zumindest eines Teiles der Prüfstandsanordnung in Abhängigkeit von dem zumindest einen im Betrieb veränderlichen Parameter abgelegt ist, dass zumindest ein Sensor für die Vibrationen vorgesehen ist, und dass ein Regelkreis vorgesehen ist, über welchen die schwingungsrelevante Eigenschaft des Elementes (4) derart verändert wird, dass die Vibrationen in Abhängigkeit des zumindest einen Parameters dem Verlauf gemäß dem Modell entsprechen, wobei dieses Modell für den Verlauf der Vibrationen vorzugsweise die gegenseitigen Wechselwirkungen im Rahmen eines Mehrkörpermodells berücksichtigt.

10. Prüfstandsanordnung nach einem der Ansprüche 1 bis 9, **dadurch gekennzeichnet, dass** das Element (4) zumindest ein zwischen zwei Buchsen (10, 11) mit einstellbarer Vorspannung eingespanntes elastisches Element (12), vorzugsweise ein Metallgeflecht, insbesondere ein Ganzmetallkissen, aufweist.

11. Prüfstandsanordnung nach einem der Ansprüche 1 bis 9, **dadurch gekennzeichnet, dass** das Element (4) unter Verwendung einer elektro- oder magnetorheologischen Flüssigkeit aufgebaut ist.

12. Prüfstandsanordnung nach einem der Ansprüche 1 bis 9, **dadurch gekennzeichnet, dass** das Element (4) ein hydraulisches System mit veränderlichem Querschnitt und/oder Innendruck umfasst.

13. Verfahren zum Betreiben einer Prüfstandsanordnung nach einem der Ansprüche 1 bis 12, bei welchem über zumindest einen Sensor Messwerte zumindest des Prüflings (1), vorzugsweise auch der Prüfstandsanordnung und/oder der Umgebung erfasst werden, wobei die Schwingungen zwischen zumindest einem Paar von gegeneinander schwingfähigen Elementen der Prüfstandsanordnung und/der des Prüflings (1) mittels zumindest eines einstellbaren Elementes (4) beeinflusst werden **dadurch gekennzeichnet, dass** die schwingungsrelevante Eigenschaft des Elementes (4), in Abhängigkeit von zumindest einem im Betrieb veränderlichen Parameter des Prüflings (1) oder der Prüfstandsanordnung, verändert wird, um einem vorgegebenen Verlauf von Vibrationen des Prüflings (1) oder zumindest eines Teils der Prüfungsanordnung zu folgen.

14. Verfahren nach Anspruch 13, **dadurch gekennzeichnet, dass** zumindest eine der schwingungsrelevanten Eigenschaften des Elementes (4) adaptiv verändert wird, gegebenenfalls auch während eines Prüflaufes.

15. Verfahren nach Anspruch 14, **dadurch gekennzeichnet, dass** zumindest eine schwingungsrelevante Eigenschaft des Elementes (4) in Abhängigkeit von zumindest einem im Betrieb veränderlichen Parameter der Prüfstandsanordnung und/der des Prüflings (1) verändert wird.

16. Verfahren nach Anspruch 14 oder 15, **dadurch gekennzeichnet, dass** die Vibrationen zwischen zumindest einem Paar von gegeneinander schwingfähigen Elementen der Prüfstandsanordnung und/der des Prüflings (1) ermittelt werden, und dass zumindest eine schwingungsrelevante Eigenschaft des Elementes (4) derart verändert wird, dass die Vibrationen in Abhängigkeit des zumindest einen Parameters einem vordefinierten Verlauf folgen.

17. Verfahren nach Anspruch 14 oder 15, **dadurch gekennzeichnet, dass** die Vibrationen zwischen zumindest einem Paar von gegeneinander schwingfähigen Elementen der Prüfstandsanordnung und/der des Prüflings (1) ermittelt werden, und dass zumindest eine schwingungsrelevante Eigenschaft des Elementes (4) derart verändert wird, dass die Vibrationen in Abhängigkeit des zumindest einen Parameters einem durch ein Modell vorgegebenen Verlauf entspricht, wobei das Modell für den Verlauf der Vibrationen vorzugsweise die gegenseitigen Wechselwirkungen im Rahmen eines Mehrkörpermodells berücksichtigt.

18. Verfahren nach Anspruch 14, **dadurch gekennzeichnet, dass** zumindest eine schwingungsrelevante Eigenschaft des Elementes (4) derart verändert wird, dass die kritische Frequenz der Prüfstandsanordnung inklusive Prüfling (1) zu jedem Zeitpunkt außerhalb des aktuellen Frequenzbereichs liegt.

19. Verfahren nach Anspruch 18, **dadurch gekennzeichnet, dass** die Veränderung der schwingungsrelevanten Eigenschaft des Elementes (4) schneller erfolgt als jede Änderung der Frequenz der Vibrationen des Prüflings (1) und/oder der Prüfstandsanordnung.

## Claims

1. Test bench arrangement for at least one test specimen (1), comprising at least one actuator for acting on the test specimen, at least one sensor for detecting measured values and a support structure (2) for the test specimen (1), wherein at least one element (4) with at least one adjustable oscillation-relevant property is interposed between at least one pair of elements of the test bench arrangement and/or of the test specimen (1) that can oscillate against each other, **characterized in that** a control device is provided which varies the oscillation-relevant property of the element (4) on the basis of at least one parameter of the test specimen (1) or the test bench arrangement that is variable during operation, in order to follow a specified course of vibrations of the test specimen (1) or of at least one portion of the testing arrangement.

2. Test bench arrangement according to claim 1, **characterized in that** at least one oscillation-relevant property of the adjustable element (4) can be adaptively varied by a control device.

3. Test bench arrangement according to either claim 1 or claim 2, **characterized in that** the element (4) is interposed between the test specimen (1) and the test bench arrangement.

4. Test bench arrangement according to either claim 1 or claim 2, **characterized in that** the element (4) is used for mounting at least one element of the test bench arrangement.

5. Test bench arrangement according to either claim 1 or claim 2, **characterized in that** the element (4) is provided in at least one bearing arrangement (3) of at least one portion of the test bench arrangement and/or of the test specimen (1).

6. Test bench arrangement according to either claim 1 or claim 2, **characterized in that** the element (4) is interposed between the test specimen (1) and at least one actuator that acts on the test specimen (1).

7. Test bench arrangement according to any of claims 1 to 6, **characterized in that** the control device varies the oscillation-relevant property of the element (4) on the basis of at least one parameter of the test specimen (1) or of the test bench arrangement that is variable during operation.

8. Test bench arrangement according to claim 7, **characterized in that** a course of the vibrations of the test specimen (1) or at least of a portion of the test bench arrangement, which course is determined during normal operation, is stored in the control device dependent on the at least one parameter that is variable during operation, **in that** at least one sensor for the vibrations is provided, and **in that** a control loop is provided, by means of which the oscillation-relevant property of the element (4) is varied such that the vibrations dependent on the at least one parameter corresponds to the course of the vibrations stored in the controller.

9. Test bench arrangement according to claim 7, **characterized in that** a model for the course of the vibrations of the test specimen (1) or at least of a portion of the test bench arrangement is stored in the controller dependent on the at least one parameter that is variable during operation, **in that** at least one sensor for the vibrations is provided, and **in that** a control loop is provided, by means of which the oscillation-relevant property of the element (4) is varied such that the vibrations dependent on the at least one parameter correspond to the course according to the model, wherein said model for the course of the vibrations preferably taking into account the mutual interactions within the context of a multibody model.

10. Test bench arrangement according to any of claims 1 to 9, **characterized in that** the element (4) comprises at least one resilient element (12), preferably a metal braid, in particular an all-metal cushion, that is clamped between two bushes (10, 11) so as to have an adjustable preload.

11. Test bench arrangement according to any of claims 1 to 9, **characterized in that** the element (4) is constructed using an electro- or magnetorheological fluid.

12. Test bench arrangement according to any of claims 1 to 9, **characterized in that** the element (4) comprises a hydraulic system having a variable cross section and/or internal pressure.

13. Method for operating a test bench arrangement according to one of claims 1 to 12, in which measured values at least of the test specimen (1), preferably also of the test bench arrangement and/or of the surroundings, are detected by at least one sensor, wherein the oscillations between at least one pair of elements of the test bench arrangement and/or of the test specimen (1) that can oscillate against each other being influenced by at least one adjustable element (4), **characterized in that** the oscillation-relevant property of the element (4) is varied, on the basis of at least one parameter of the test specimen (1) or of the test bench arrangement that is variable during operation, in order to follow a specified course of vibrations of the test specimen (1) or at least of a portion of the testing arrangement.

14. Method according to claim 13, **characterized in that** at least one of the oscillation-relevant properties of the element (4) is adaptively varied, optionally also during a test run.

15. Method according to claim 14, **characterized in that** at least one oscillation-relevant property of the element (4) is varied dependent on at least one parameter of the test bench arrangement and/or of the test specimen (1) that is variable during operation.

16. Method according to either claim 14 or claim 15, **characterized in that** the vibrations between at least one pair of elements of the test bench arrangement and/or of the test specimen (1) that can oscillate against each other are determined, and **in that** at least one oscillation-relevant property of the element (4) is varied such that the vibrations dependent on the at least one parameter follow a predefined course.

17. Method according to either claim 14 or claim 15, **characterized in that** the vibrations between at least one pair of elements of the test bench arrangement and/or of the test specimen (1) that can oscillate against each other are determined, and **in that** at least one oscillation-relevant property of the element (4) is varied such that the vibrations dependent on the at least one parameter correspond to a course specified by a model, wherein the model for the course of the vibrations preferably taking into account the mutual interactions within the context of a multibody model.

18. Method according to claim 14, **characterized in that** at least one oscillation-relevant property of the element (4) is varied such that the critical frequency of the test bench arrangement including the test specimen (1) is outside the current frequency range at each point in time.

19. Method according to claim 18, **characterized in that** the variation of the oscillation-relevant property of the element (4) occurs more rapidly than any change in the frequency of the vibrations of the test specimen (1) and/or of the test bench arrangement.

## Revendications

1. Banc d'essai, destiné à au moins un échantillon (1), comprenant au moins un actionneur agissant sur l'échantillon, au moins un capteur de détection de valeurs de mesure et une structure de support (2) destinée à l'échantillon (1), au moins un élément (4) réglable quant à au moins une caractéristique vibratoire étant interposé entre au moins une paire d'éléments, vibrant l'un par rapport à l'autre, du banc d'essai et/ou de l'échantillon (1), **caractérisé en ce qu'**un moyen de commande est prévu qui fait varier la caractéristique vibratoire de l'élément (4) en fonction d'au moins un paramètre, variable en fonctionnement, de l'échantillon (1) ou du banc d'essai pour suivre une allure prédéterminée des vibrations de l'échantillon (1) ou au moins une partie du banc d'essai.

2. Banc d'essai selon la revendication 1, **caractérisé en ce que** l'élément réglable (4) peut être modifié par un dispositif de commande de manière adaptative quant à au moins une caractéristique vibratoire.

3. Banc d'essai selon l'une des revendications 1 ou 2, **caractérisé en ce que** l'élément (4) est interposé entre l'échantillon (1) et le banc d'essai.

4. Banc d'essai selon l'une des revendications 1 ou 2, **caractérisé en ce que** l'élément (4) sert à supporter au moins un élément du banc d'essai.

5. Banc d'essai selon l'une des revendications 1 ou 2, **caractérisé en ce que** l'élément (4) est prévu dans au moins un ensemble de support (3) d'au moins une partie du banc d'essai et/ou de l'échantillon (1).

6. Banc d'essai selon l'une des revendications 1 ou 2, **caractérisé en ce que** l'élément (4) est interposé entre l'échantillon (1) et au moins un actionneur agissant sur l'échantillon (1).

7. Banc d'essai selon l'une des revendications 1 à 6, **caractérisé en ce que** le moyen de commande modifie la caractéristique vibratoire de l'élément (4) en fonction d'au moins un paramètre (1), variable en fonctionnement, de l'échantillon ou du banc d'essai.

8. Banc d'essai selon la revendication 7, **caractérisé en ce qu'**une allure, déterminée en fonctionnement normal, des vibrations de l'échantillon (1) ou d'au moins une partie du banc d'essai en fonction de l'au moins un paramètre variable en fonctionnement est mémorisée dans le moyen de commande, **en ce qu'**au moins un capteur de vibrations est prévu, et **en ce qu'**une boucle de régulation est prévue qui modifie la caractéristique vibratoire de l'élément (4) de telle sorte que les vibrations correspondent, en fonction de l'au moins un paramètre, à l'allure des vibrations mémorisées dans le moyen de commande.

9. Banc d'essai selon la revendication 7, **caractérisé en ce qu'**un modèle de l'allure des vibrations de l'échantillon (1) ou au moins d'une partie du banc d'essai en fonction de l'au moins un paramètre variable en fonctionnement est mémorisé dans le moyen de commande, **en ce qu'**au moins un capteur de vibration est prévu, et **en ce qu'**une boucle de commande est prévue qui modifie la caractéristique vibratoire de l'élément (4) de sorte que les vibrations correspondent, en fonction d'au moins un paramètre, à l'allure selon le modèle, ce modèle de l'allure des vibrations prenant de préférence en compte les interactions dans le cadre d'un modèle à corps multiples.

10. Banc d'essai selon l'une des revendications 1 à 9, **caractérisé en ce que** l'élément (4) comporte au moins un élément élastique (12) inséré entre deux douilles (10, 11) avec une précontrainte réglable, de préférence un tissage métallique, en particulier un coussin entièrement métallique.

11. Banc d'essai selon l'une des revendications 1 à 9, **caractérisé en ce que** l'élément (4) est réalisé à l'aide d'un fluide électro- ou magnéto-rhéologique.

12. Banc d'essai selon l'une des revendications 1 à 9, **caractérisé en ce que** l'élément (4) comporte un système hydraulique à section transversale et/ou à pression interne variable.

13. Procédé de fonctionnement d'un banc d'essai selon l'une des revendications 1 à 12, dans lequel au moins un capteur détecte des valeurs de mesure au moins de l'échantillon (1), de préférence également du banc d'essai et/ou de l'environnement, les vibrations entre au moins une paire d'éléments, qui vibrent l'un par rapport à l'autre, du banc d'essai et/de l'échantillon (1) étant influencées par au moins un élément réglable (4), **caractérisé en ce que** la caractéristique vibratoire de l'élément (4) est modifiée en fonction d'au moins un paramètre, variable en fonctionnement, de l'échantillon (1) ou du banc d'essai pour suivre l'allure prédéterminée des vibrations de l'échantillon (1) ou d'au moins une partie du banc d'essai.

14. Procédé selon la revendication 13, **caractérisé en ce que** l'une au moins des caractéristiques vibratoires de l'élément (4) est modifiée de manière adaptative, éventuellement aussi pendant un essai.

15. Procédé selon la revendication 14, **caractérisé en ce qu'**au moins une caractéristique vibratoire de l'élément (4) est modifiée en fonction d'au moins un paramètre, variable en fonctionnement, du banc d'essai et/ou de l'échantillon (1).

16. Procédé selon la revendication 14 ou 15, **caractérisé en ce que** les vibrations entre au moins une paire d'éléments, vibrant l'un par rapport à l'autre, du banc d'essai et/ou de l'échantillon (1) sont déterminées et **en ce qu'**au moins une caractéristique vibratoire de l'élément (4) est modifiée de telle sorte que les vibrations suivent une allure prédéfinie en fonction de l'au moins un paramètre.

17. Procédé selon la revendication 14 ou 15, **caractérisé en ce que** les vibrations entre au moins une paire d'éléments, vibrant l'un par rapport à l'autre, du banc d'essai et/ou de l'échantillon (1) sont déterminées, et **en ce qu'**au moins une caractéristiques vibratoire de l'élément (4) est modifiée de telle sorte que les vibrations correspondent, en fonction de l'au moins un paramètre, à une allure prédéfinie par un modèle, le modèle de l'allure des vibrations prenant de préférence en compte les interactions dans le cadre d'un modèle à corps multiples.

18. Procédé selon la revendication 14, **caractérisé en ce qu'**au moins une caractéristique vibratoire de l'élément (4) est modifiée de telle sorte que la fréquence critique du banc d'essai, y compris l'échantillon (1), se trouve en dehors de la gamme de fréquences actuelle à tout moment.

19. Procédé selon la revendication 18, **caractérisé en ce que** la variation de la caractéristique vibratoire de l'élément (4) est effectuée plus rapidement que toute variation de la fréquence des vibrations de l'échantillon (1) et/ou du banc d'essai.
